# EUROPÄISCHE PATENTSCHRIFT

(11) **EP 2 875 571 B1**
(45) Veröffentlichungstag und Bekanntmachung des Hinweises auf die Patenterteilung: **17.06.2020**
(21) Anmeldenummer: 13742200.2
(22) Anmeldetag: 23.07.2013
(51) Int. Cl.: H02K 16/04, H02K 11/33, H02K 11/215, H02K 21/14, H02K 21/24, H02K 21/22

(54) **ELEKTRISCHE MASCHINE**
ELECTRIC MACHINE
MACHINE ÉLECTRIQUE

(30) Priorität: 23.07.2012 DE 102012014517
(43) Veröffentlichungstag der Anmeldung: 27.05.2015
(73) Patentinhaber: emec prototyping GmbH, 01187 Dresden (DE)
(72) Erfinder: BECKERT, René, 01159 Dresden (DE); RÜCKEMANN, Andreas, 01454 Ullersdorf (DE); KAMP, Hendrik, 01324 Dresden (DE)
(74) Vertreter: Witte, Weller & Partner Patentanwälte mbB
(86) Internationale Anmeldenummer: PCT/EP2013/065533
(87) Internationale Veröffentlichungsnummer: WO 2014/016305

(56) Entgegenhaltungen:
- WO-A1-2009/053520
- WO-A1-2010/055534
- GB-A- 2 456 351
- GB-A- 2 462 940
- US-A1- 2009 309 463

## Beschreibung

Die vorliegende Erfindung betrifft eine elektrische Maschine zum Bereitstellen von Antriebsleistung, insbesondere zum Antreiben von Kraftfahrzeugen, mit einer Statoranordnung, die eine Mehrzahl von Spulen aufweist, einem Rotor, der relativ zu der Statoranordnung drehbar gelagert ist und von einem magnetischen Feld der Spulen in wenigstens einer Drehrichtung antreibbar ist, und einer Mehrzahl von Steuereinheiten, die mit den Spulen elektrisch verbunden sind, um die Spulen anzusteuern und zur Erzeugung des magnetischen Feldes mit elektrischem Strom zu versorgen, wobei die Steuereinheiten jeweils einer einzelnen Spule zugeordnet, um die jeweiligen Spulen unabhängig mit elektrischem Strom zu versorgen.

Auf dem Gebiet der elektrischen Maschinen, insbesondere auf dem Gebiet der Synchronmaschinen ist es allgemein bekannt, an einem Stator eine Mehrzahl von Spulen anzuordnen und diese Spulenanordnung mittels eines Wechselrichters mehrphasig mit elektrischem Strom zu versorgen, um zum Antreiben eines Rotors der elektrischen Maschine ein rotierendes Magnetfeld zu erzeugen. Die Spulen der Spulenanordnungen sind üblicherweise zusammengeschaltet, so dass alle Spulen der Spulenanordnung mittels eines Wechselrichters bzw. einer Steuereinheit angesteuert und mehrphasig bestromt werden können.

Bei elektrischen Maschinen zum Antreiben von Kraftfahrzeugen, insbesondere zum Antreiben von Elektrofahrrädern, ist es vorteilhaft, wenn von dem elektrischen Antrieb unterschiedliche Arbeitspunkte mit unterschiedlichen Drehzahl-Drehmoment-Kennlinien eingestellt werden können, um die Kraftfahrzeuge elektronisch mit unterschiedlichen Drehmomenten anzutreiben. Üblicherweise werden diese unterschiedlichen Drehzahl- und Drehmomentcharakteristiken bereitgestellt, indem ein zusätzliches mechanisches Getriebe mit der elektrischen Maschine verbunden ist, oder die elektrische Leistung, die von der Steuereinheit bereitgestellt wird, variiert wird. Die Statorspulen werden üblicherweise von einer Steuereinheit mit elektrischem Strom versorgt, wobei die Steuereinheit den elektrischen Strom mittels Leistungshalbleitern, insbesondere mittels IGBTs bereitstellt. Da die Leistungshalbleiter den gesamten elektrischen Strom tragen, der zur Bestromung der Spulenanordnung bereitgestellt wird, müssen die Leistungshalbleiter auf die maximale elektrische Leistung des Elektromotors ausgelegt werden. Derartige Leistungshalbleiter sind technisch aufwändig und teuer und müssen mit großem Aufwand gekühlt werden, um die entstehende Verlustleistung abzuführen. Ferner kann durch das einzelne Steuergerät, das alle Statorspulen bestromt, lediglich ein Arbeitspunkt der elektrischen Maschine, also eine Drehzahl-Drehmoment-Kennlinie, eingestellt werden, wodurch die Flexibilität des elektrischen Antriebs beschränkt ist.

Ferner werden üblicherweise zum Antreiben von Kraftfahrzeugen, insbesondere von Elektrofahrradern, Nabenmotoren eingesetzt, die aufgrund ihres Einbauortes ein großes Drehmoment zum Antreiben des Fahrzeugs bereitstellen müssen, wobei allerdings große Drehmomente von elektrischen Maschinen lediglich durch große Erregerströme in den Erregerspulen bereitgestellt werden können. Dadurch müssen die Leistungshalbleiterschalter der Steuereinheit zum Ansteuern der elektrischen Maschine wiederum für große Ströme und große Verlustleistungen ausgelegt werden, wodurch die Steuereinheiten technisch aufwändig und teuer werden.

Zur Einstellung von unterschiedlichen Arbeitspunkten wird bspw. in der EP 1 450 469 A2 vorgeschlagen, die Spulen des Stators unterschiedlich zusammenzuschalten, um unterschiedliche Erregerfelder bereitzustellen. Dabei wird unter anderem vorgeschlagen, zwei unabhängige Spulenkreise in dem Stator auszubilden, die jeweils von einer Verstärkerstufe unabhängig dreiphasig angesteuert und bestromt werden. Nachteilig dabei ist es, dass die Verstärkerstufen jeweils eine vollständige Stern- oder Dreieckschaltung dreiphasig bestromen und dadurch die Leistungshalbleiter der Verstärkerstufen einen hohen Strom tragen müssen und entsprechend aufwändig gekühlt werden müssen. Ferner können durch diese unterschiedlichen Schaltungen lediglich vier unterschiedliche Arbeitspunkte der elektrischen Maschine eingestellt werden.

Darüber hinaus sind im Stand der Technik wie z.B. aus der DE 10 2011 050 504 A1 elektrische Maschinen mit Doppelstatoren bekannt, die aufgrund ihres Doppelstatorprinzips eine geringe axiale Bauform aufweisen und durch Verringern von Eisenverlusten eine verbesserte Effizienz bei hohen Rotationsgeschwindigkeiten aufweisen. Nachteilig dabei ist es, dass durch die Steuereinheit die Spulen des Doppelstators gemeinsam angesteuert und bestromt wird, wodurch sehr leistungsfähige Leistungshalbleiter verwendet werden müssen, die mit hohem technischen Aufwand gekühlt werden müssen.

Aus der WO 2009/053520 A1 ist ein elektrischer Antrieb bekannt, bei dem einzelne Spulen zwischen zwei invers angesteuerte Wechselrichter geschaltet sind, um ein zusätzliches magnetisches Feld zum Antreiben des elektrischen Antriebs zu erzeugen.

Aus der GB 2 462 940 A ist eine elektrische Maschine bekannt mit einem Ständer, der eine Mehrzahl von Spulensätzen aufweist, wobei jeder Spulensatz eine Mehrzahl von Unterspulengruppen aufweist und eine Mehrzahl von Steuereinheiten, wobei eine Steuereinheit einem Spulensatz zugeordnet ist.

Aus der GB 2 456 351 A ist ein elektrischer Fahrzeugantrieb bekannt mit einer Mehrzahl von Spulensätzen, die ein magnetisches Feld zum Antreiben des Motors erzeugen, wobei jeder Spulensatz eine Mehrzahl von individuellen erregbaren Spulen aufweist.

Angesichts des Standes der Technik liegt der vorliegenden Erfindung die Aufgabe zugrunde eine elektrische Maschine bereitzustellen, die eine flexiblere Ansteuerung mit unterschiedlichen Arbeitspunkten und technisch weniger aufwändige Steuereinheiten zum Ansteuern der Statorspulen ermöglicht.

Diese Aufgabe wird bei der eingangs genannten elektrischen Maschine gemäß einem ersten Aspekt der Erfindung dadurch gelöst, dass die Statoranordnung eine Mehrzahl von Statorzähnen aufweist, wobei die unabhängig angesteuerten Spulen an unterschiedlichen Statorzähnen angeordnet sind und dass die unabhängig angesteuerten Spulen magnetisch gekoppelt sind und und die Steuereinheiten dazu ausgebildet sind, die magnetisch gekoppelten Spulen entgegengesetzt derart anzusteuern, dass die Spulen entgegengesetzte magnetische Flüsse ausbilden, so dass die einzelnen magnetischen Flüsse, die zusammen den magnetischen Fluss bilden, entgegengesetzt sind und so den magnetischen Fluss entsprechend teilweise aufheben. Die Elektrische Maschine weist eine übergeordnete Steuereinheit auf, die mit den Steuereinheiten verbunden ist und die Steuereinheiten entsprechend ansteuert.

Ferner wird die oben genannte Aufgabe bei der eingangs genannten elektrischen Maschine gemäß einem zweiten Aspekt dadurch gelöst, dass die Statoranordnung einen ersten Stator und einen zweiten Stator aufweist, wobei wenigstens ein Teil des Rotors zwischen dem ersten Stator und dem zweiten Stator drehbar gelagert ist, wobei der erste Stator eine erste Spulenanordnung mit einer Mehrzahl von Spulen aufweist und der zweite Stator eine zweite Spulenanordnung mit einer Mehrzahl von Spulen aufweist, und wobei die Steuereinheiten, insbesondere zwei der Steuereinheiten jeweils einer der Spulenanordnungen zugeordnet sind, um die Spulenanordnungen unabhängig voneinander anzusteuern und unabhängig mit elektrischem Strom zu versorgen.

Dadurch, dass bei dem ersten Aspekt der vorliegenden Erfindung die Steuereinheiten jeweils einer einzelne bzw. genau einer der Spulen zugeordnet ist, um die jeweiligen Spulen unabhängig anzusteuern und unabhängig mit elektrischem Strom zu versorgen, ist der elektrische Strom, der von der jeweiligen Steuereinheit getrieben werden muss, reduziert und die einzeln angesteuerte Spule kann unabhängig zu- oder abgeschaltet werden, wodurch unterschiedliche Arbeitspunkte der elektrischen Maschine eingestellt werden können und die Ansteuerung der elektrischen Maschine flexibler wird. Dadurch wird der technische Aufwand der Steuereinheit reduziert und die elektrische Maschine kann flexibler betrieben werden. Ferner kann durch die magnetische Kopplung der magnetische Fluss durch Zu- und Abschalten einer der Spulen variiert werden, wodurch unterschiedliche Drehmomente von der elektrischen Maschine bereitgestellt werden können.

Da bei dem zweiten Aspekt der vorliegenden Erfindung die Spulenanordnungen des ersten Stators und des zweiten Stators unterschiedlichen Steuereinheiten zugeordnet sind und die Steuereinheiten die jeweiligen Spulenanordnungen unabhängig ansteuern und mit elektrischem Strom versorgen können, ist der elektrische Strom, der von den jeweiligen Steuereinheiten getrieben werden muss, reduziert, wodurch der technische Aufwand der Steuereinheit verringert, da insbesondere die Leistungshalbleiter für geringere elektrische Ströme ausgelegt werden können und der Aufwand zur Kühlung der Leistungshalbleiter reduziert werden kann. Ferner können die Spulenanordnungen beliebig zu- oder abgeschaltet werden, wodurch unterschiedliche Arbeitspunkte der elektrischen Maschine eingestellt werden können und somit die elektrische Maschine flexibler betrieben werden kann. Ferner kann durch die höheren Magnetfeldstärken bedingt durch die zwei Statoren auf teure Permanentmagneten auf der Basis von seltenen Erden, wie z.B. Neodymmagneten, verzichtet werden und kostengünstigere Ferritmagnete verwendet werden.

Es ist im Allgemeinen besonders bevorzugt, wenn die Steuereinheiten dazu ausgebildet sind, die unabhängige angesteuerten Spulen derart anzusteuern, dass zwei der unabhängig angesteuerten und magnetisch gekoppelten bzw. koppelbaren Spulen wenigstens zeitweise von einem gemeinsamen magnetischen Fluss durchsetzt werden.

Dadurch können unterschiedliche magnetische Flüsse und somit unterschiedliche Drehmomente erzeugt werden.

Es ist weiterhin bevorzugt, wenn die Steuereinheiten dazu ausgebildet sind, die unabhängig angesteuerten Spulen mit unterschiedlichen Stromstärken anzusteuern.

Dadurch können mit geringem technischem Aufwand unterschiedliche magnetische Flüsse erzeugt werden.

Es ist weiterhin bevorzugt, wenn die Steuereinheiten dazu ausgebildet sind, die magnetisch gekoppelten bzw. magnetisch koppelbaren Spulen entgegengesetzt derart anzusteuern, dass die Spulen entgegengesetzte magnetische Flüsse ausbilden.

Dadurch kann mit technisch geringem Aufwand der magnetische Fluss reduziert werden, um besonders kleine Drehmomente zu erzeugen.

Es ist weiterhin bevorzugt, wenn die unabhängig angesteuerten Spulen unterschiedliche Windungszahlen aufweisen.

Dadurch können unterschiedliche magnetische Flüsse mit derselben Stromstärke erzeugt werden, wodurch durch Zu- und Abschalten von einzelnen unabhängig angesteuerten Spulen unterschiedliche Drehmomente erzeugt werden können.

In einer bevorzugten Ausführungsform weist die elektrische Maschine wenigstens drei Steuereinheiten auf, wobei jede der Steuereinheiten einer einzelnen Spule zugeordnet ist, um die Spulen unabhängig anzusteuern und wobei die Steuereinheiten derart synchronisiert sind, dass ein rotierendes Magnetfeld zum Antreiben des Rotors bereitgestellt wird.

Dadurch kann der Rotor konventionell durch ein rotierendes Magnetfeld angetrieben werden und die Steuereinheiten mit geringem technischem Aufwand hergestellt werden, da die einzelnen Spulen mit einem geringerem elektrischen Strom betrieben werden können,

In einer weiterhin bevorzugten Ausführungsform ist eine der Steuereinheiten einer Gruppe von mehreren Spulen zugeordnet, um die Spulengruppe unabhängig anzusteuern und mit elektrischem Strom zu versorgen.

Mit anderen Worten wird wenigstens eine der Spulen separat von einer der Steuereinheiten angesteuert und mehrere Spulen, die in einer Gruppe zusammengeschaltet sind, von einer weiteren Steuereinheit angesteuert und bestromt.

Dadurch kann die elektrische Maschine einerseits konventionell mittels der Gruppe von mehreren Spulen angesteuert werden, sofern eine geringere Antriebsleistung angefordert wird und kann in besonderen Ansteuersituationen von der einzeln angesteuerten Spule angesteuert werden, oder in besonderen Ansteuersituationen sowohl von der Gruppe von Spulen als auch von der einzeln angesteuerten Spule angetrieben werden. Dadurch wird im Allgemeinen die Ansteuerung der elektrischen Maschine flexibler, wodurch insbesondere asymmetrische Magnetfelder erzeugt werden können.

Es ist weiterhin bevorzugt, wenn der Statoranordnung wenigstens ein Rotorpositionserfassungselement zugeordnet ist, das mit den Steuereinheiten elektrisch verbunden ist, um die Steuereinheiten mit einer erfassten Position des Rotors zu synchronisieren.

Dadurch wird die Ansteuerung der elektrischen Maschine präziser, wodurch der Wirkungsgrad erhöht und die abgegebene Antriebsleistung verbessert werden kann.

Es ist weiterhin bevorzugt, wenn die Statoranordnung den Rotor umfänglich umgibt.

Dadurch ist eine in radialer Richtung kompakte Bauform der elektrischen Maschine möglich, die mit geringem technischen Aufwand hergestellt werden kann.

Gemäß einer bevorzugten Ausführungsform weist die Statoranordnung einen ersten Stator und einen zweiten Stator auf, wobei wenigstens ein Teil des Rotors zwischen dem ersten und dem zweiten Stator drehbar gelagert ist, wobei der erste Stator eine erste Spulenanordnung mit einer Mehrzahl von Spulen aufweist und der zweite Stator eine zweite Spulenanordnung mit einer Mehrzahl von Spulen aufweist, und wobei die Steuereinheiten jeweils einer der Spulenanordnungen zugeordnet sind, um die Spulenanordnungen unabhängig voneinander anzusteuern und unabhängig mit elektrischem Strom zu versorgen.

Dadurch, dass die Statoranordnung zwei Statoren bzw. einen Doppelstator aufweist und die Spulen unabhängig voneinander bestrombar sind, kann mit einfachen technischen Mitteln der magnetische Fluss zum Antreiben des Rotors durch Zu- und Abschalten von Spulen eingestellt werden, wodurch die Flexibilität der einstellbaren Arbeitspunkte weiter erhöht werden kann und höhere Drehmomente durch einen größeren magnetischen Fluss erzielt werden können.

Dabei ist es besonders bevorzugt, wenn der erste Stator ein Außenstator und der zweite Stator ein Innenstator ist, wobei wenigstens ein Teil des Rotors in radialer Richtung zwischen dem Außenstator und dem Innenstator drehbar gelagert ist.

Dadurch ist eine Doppelstatormaschine mit axial kompakter Bauform möglich.

Des Weiteren ist es besonders bevorzugt, wenn wenigstens zwei der Steuereinheiten jeweils einer einzelnen der Spulen zugeordnet sind, um die jeweilige Spule anzusteuern und unabhängig mit elektrischem Strom zu versorgen.

Dadurch können unterschiedliche Drehmomente und unterschiedliche Leistungen durch die elektrische Maschine bereitgestellt werden.

Dabei ist es von besonderem Vorzug, wenn eine unabhängig angesteuerte Spule mit dem ersten Stator verbunden ist und eine weitere unabhängig angesteuerte Spule mit dem zweiten Stator verbunden ist.

Dadurch können sowohl die Spulen des ersten Stators als auch die Spulen des zweiten Stators flexibel ein magnetisches Feld zum Antreiben des Rotors einstellen, wodurch die Flexibilität der Ansteuerung der elektrischen Maschine weiterhin erhöht ist.

Es ist weiterhin bevorzugt, wenn die erste und die zweite Spulenanordnung jeweils drei Spulen aufweisen und wobei beiden Spulenanordnungen jeweils drei Steuereinheiten zugeordnet sind, die jeweils mit einer einzelnen der Spulen verbunden sind, um die Spulen unabhängig anzusteuern und wobei die Steuereinheiten derart synchronisiert sind, dass ein rotierendes Magnetfeld bereitgestellt wird.

Dadurch können sowohl der erste als auch der zweite Stator unabhängig voneinander flexibel beliebige rotierende Magnetfelder bereitstellen, insbesondere auch elliptische rotierende Magnetfelder, um die elektrische Maschine flexibel mit unterschiedlichen Arbeitspunkten zu betreiben.

Es ist weiterhin bevorzugt, wenn die unabhängig angesteuerten Spulen magnetisch gekoppelt sind, so dass die unabhängig angesteuerten Spulen von einem gemeinsamen magnetischen Fluss durchsetzt werden.

Dadurch kann der magnetische Fluss nahezu beliebig eingestellt werden, wodurch das Drehmoment der elektrischen Maschine variabel einstellbar ist.

Es ist weiterhin bevorzugt, wenn die magnetisch gekoppelten Spulen jeweils an gegenüberliegenden Statorzähnen des Innenstators und des Außenstators angeordnet sind.

Dadurch kann der magnetische Fluss eines jeden Statorpaars individuell eingestellt werden.

Es ist weiterhin bevorzugt, wenn die Steuereinheiten dazu ausgebildet sind, die magnetisch gekoppelten Spulen entgegengesetzt derart anzusteuern, dass die Spulen entgegengesetzte magnetische Flüsse ausbilden.

Dadurch kann der entstehende magnetische Gesamtfluss in einem Statorzahnpaar beliebig eingestellt werden, wodurch das Drehmoment der elektrischen Maschine beliebig eingestellt werden kann.

Es ist weiterhin bevorzugt, wenn die unabhängig angesteuerten und/oder magnetisch gekoppelten Spulen unterschiedliche Windungszahlen aufweisen.

Dadurch können mit technisch geringem Aufwand unterschiedliche magnetische Flüsse eingestellt werden, da derselbe elektrische Strom unterschiedliche magnetische Flüsse einstellt.

Es ist weiterhin bevorzugt, wenn zwischen dem Rotor und der Statoranordnung ein Abschirmelement angeordnet ist, das relativ zu der Statoranordnung beweglich gelagert ist, um die Spulen, insbesondere die abgeschalteten Spulen, gegenüber dem Rotor magnetisch abzuschirmen.

Dadurch können mit einfachen Mitteln einzelne der Spulen magnetisch von dem Rotor entkoppelt werden, wodurch eine Variation des magnetischen Flusses erzielt werden kann und wodurch gleichzeitig eine unerwünschte Induktion durch die Permanentmagneten des Rotors, insbesondere in den nicht bestromten Spulen, verhindert werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1a, b: eine schematische Darstellung einer elektrischen Maschine mit Außenstator und separat ansteuerbaren Spulen;
- Fig. 2a, b: eine schematische Darstellung einer elektrischen Maschine mit Doppelstator und separat ansteuerbaren Spulen;
- Fig. 3: eine schematische Darstellung einer Schaltung der Spulen der elektrischen Maschinen;
- Fig. 4: eine schematische Darstellung einer elektrischen Maschine mit einer Abschirmvorrichtung zum Abschirmen der Spulen;
- Fig. 5: eine schematische Schnittansicht einer Ausführungsform der elektrischen Maschine mit Doppelstator;
- Fig. 6a-c: ein Antriebsrad eines Kraftfahrzeugs mit einem offenen Statorring zum Antreiben eines ringförmigen Rotors;
- Fig. 7a, b: Schnittansichten des offenen Statorrings aus den Fig. 6a, b; und
- Fig. 8: eine schematische Darstellung des offenen Statorrings in radialer Blickrichtung.

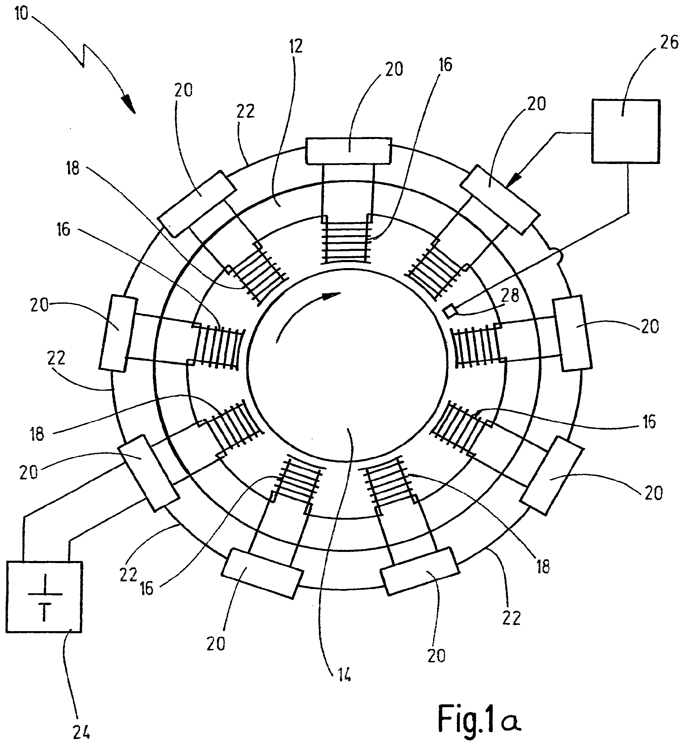

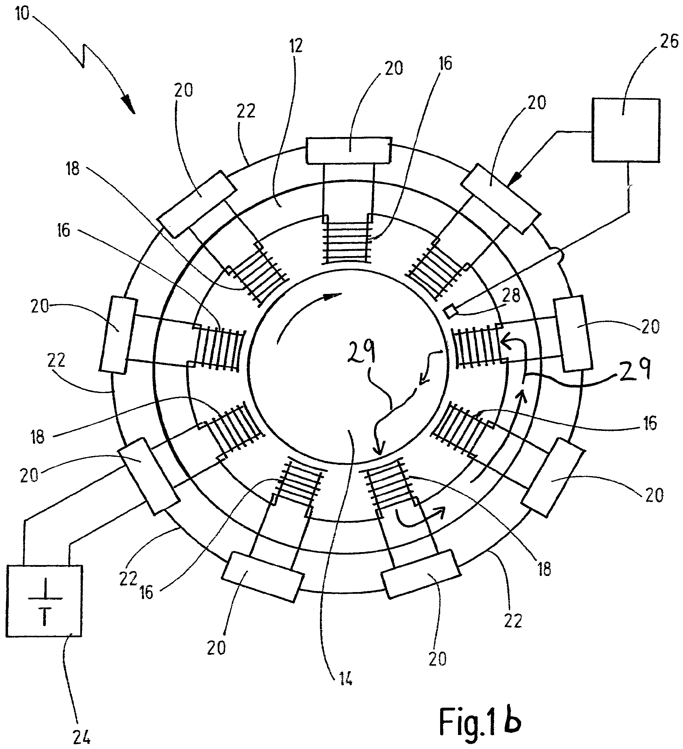

In Fig. 1 ist eine elektrische Maschine schematisch dargestellt und allgemein mit 10 bezeichnet.

Die elektrische Maschine 10 weist einen feststehenden Stator 12 und einen drehbar gelagerten Rotor 14 auf. Der Stator 12 ist als geschlossener Statorring ausgebildet und umgibt den Rotor 14 umfänglich. Der Stator 12 weist neun Statorzähne 16 auf, die radial nach innen gerichtet sind und an denen jeweils eine Spule 18 angeordnet ist. Die Spulen 18 sind mittels Anschlussleitungen jeweils mit einer Steuereinheit 20 elektrisch verbunden, die die Spulen 18 jeweils einzeln ansteuern und unabhängig mit elektrischem Strom versorgen, um ein magnetisches Feld zum Antreiben des Rotors 14 zu erzeugen. Der Rotor 14 weist hier nicht gesondert dargestellte Permanentmagneten auf, die von dem magnetischen Feld der Spulen 18 erregt werden und den Rotor 14 entsprechend antreiben. Der Stator 12 weist in diesem Beispiel neun Statorzähne 16 auf. Es versteht sich, dass der Stator 12 auch jede beliebige andere Anzahl von Statorzähnen 16 aufweisen kann.

Die Steuereinheiten 20 sind jeweils mittels Verbindungsleitungen 22 elektrisch miteinander verbunden. Den Steuereinheiten 20 ist eine Gleichspannungsquelle 24 zugeordnet, um die Steuereinheiten 20 über die Verbindungsleitungen 22 mit elektrischer Energie zu versorgen. Alternativ kann die elektrische Maschine 10 auch mehrere Gleichspannungsquellen 24 aufweisen, die einzelnen der Steuereinheiten 20 oder mehreren der Steuereinheiten zugeordnet sind. In einer weiteren Ausführungsform weist jede der Steuereinheiten 20 eine eigene Gleichspannungsquelle 24 auf. Die elektrische Maschine 10 weist ferner eine übergeordnete Steuereinheit 26 auf, die mit den Steuereinheiten 20 verbunden ist und die Steuereinheiten 20 entsprechend steuert.

Dem Rotor 14 ist ein Hall-Sensor 28 zugeordnet, der mit der übergeordneten Steuereinheit 26 verbunden ist. Der Hall-Sensor 28 erfasst die Rotationsposition des Rotors 14, so dass die übergeordnete Steuereinheit 26 die Steuereinheiten 20 entsprechend präzise ansteuern kann, um die Steuereinheiten 20 bzw. die Spulen 18 entsprechend der Rotationsposition des Rotors 14 zu synchronisieren. Zur Synchronisation der Steuereinheiten 20 und zur elektrischen Energieversorgung der Steuereinheiten 20 sind die Steuereinheiten 20 über die Verbindungsleitungen 22 elektrisch miteinander verbunden.

Die Steuereinheiten 20 sind als Wechselrichter ausgebildet und weisen eine Mehrzahl von Leistungshalbleiterschaltern auf, um die von der Gleichspannungsquelle 24 bereitgestellte Gleichspannung in eine Wechselspannung zum Bestromen der Spulen 18 umzurichten. Die Steuereinheiten 20 können ferner Hochsetzsteller, Tiefsetzsteller und/oder Hoch-/Tiefsetzsteller aufweisen, um die Gleichspannung entsprechend zu wandeln und die Spulen entsprechend mit unterschiedlicher elektrischer Energie zu versorgen.

Dadurch, dass die Spulen 18 alle mit einer separaten Steuereinheit 20 elektrisch verbunden sind, können alle Spulen 18 separat zu- und abgeschaltet werden und unabhängig voneinander mit elektrischer Energie versorgt werden. Dadurch kann die elektrische Maschine 10 variabel mit unterschiedlichen Arbeitspunkten bzw. unterschiedlichen Drehzahl-Drehmoment-Kennlinien angetrieben werden. Dazu werden einzelne der Spulen 18 zu- oder abgeschaltet, um zwischen den einzelnen Kennlinien zu wechseln. Beispielsweise kann der Rotor 14 lediglich durch Ansteuerung von drei der Spulen 18, die 120° versetzt zueinander angeordnet sind, angetrieben werden, so dass lediglich ein Drittel der Spulen 18 angesteuert werden. Durch die Synchronisation der Steuereinheiten 20 und die Erfassung der Rotorposition mittels des Hall-Sensors 28 kann ein rotierendes Magnetfeld erzeugt werden, um den Rotor 14 entsprechend anzutreiben. Dadurch, dass die Spulen 18 auch unterschiedlich bestromt werden können, kann in besonderen Situationen auch ein elliptisches rotierendes Magnetfeld erzeugt werden.

Insgesamt kann durch die separate Ansteuerung der Spulen 18 die elektrische Maschine 10 in unterschiedlichen Arbeitspunkten und flexibel angesteuert werden. Ferner sind die von den Steuereinheiten 20 maximal bereitzustellende elektrische Ströme reduziert, wodurch die Steuereinheiten 20 bzw. die Leistungshalbleiterschalter der Steuereinheiten 20 entsprechend geringer dimensioniert werden müssen, wodurch diese technisch weniger aufwändig und kostengünstig werden.

In Fig. 1b ist die elektrische Maschine 10 aus Fig. 1a schematisch dargestellt zur Erläuterung der Erzeugung des magnetischen Flusses. Der magnetische Fluss ist in Fig. 1b schematisch dargestellt und allgemein mit 29 bezeichnet.

Der magnetische Fluss 29 wird durch zwei unabhängig ansteuerbare Spulen 18 erzeugt, die an unterschiedlichen Statorzähnen 16 angeordnet sind. Der magnetische Fluss 29 wird in dem Rotor 14, den entsprechenden Statorzähnen 16 und dem Statorring 12 ausgebildet. Durch die entsprechende Ansteuerung der Spulen 18 werden die beiden Spulen 18 durch den gemeinsamen magnetischen Fluss 29 durchsetzt, wobei die beiden angesteuerten Spulen 18 entsprechend magnetisch gekoppelt sind.

Die Spulen 18 werden in aufeinanderfolgenden Kommutierungsschritten unterschiedlich angesteuert, so dass ein rotierendes Magnetfeld entsteht und je nach Kommutierungsschritt unterschiedliche Spulen 18 angesteuert werden. Die gleichzeitig angesteuerten Spulen 18 können mit derselben elektrischen Stromstärke oder mit unterschiedlichen elektrischen Stromstärken angesteuert werden, um den magnetischen Fluss 29 entsprechend präzise einzustellen. Dabei können in einer besonderen Ausführungsform auch entgegensetzte Ströme in den so magnetisch gekoppelten Spulen ausgebildet werden, so dass die einzelnen magnetischen Flüsse, die zusammen den magnetischen Fluss 29 bilden, entgegengesetzt sind und so den magnetischen Fluss entsprechend teilweise aufheben.

In einer besonderen Ausführungsform weisen die unabhängig ansteuerbaren Spulen 18 unterschiedliche Windungszahlen auf, um unterschiedliche magnetische Einzelflüsse zu erzeugen.

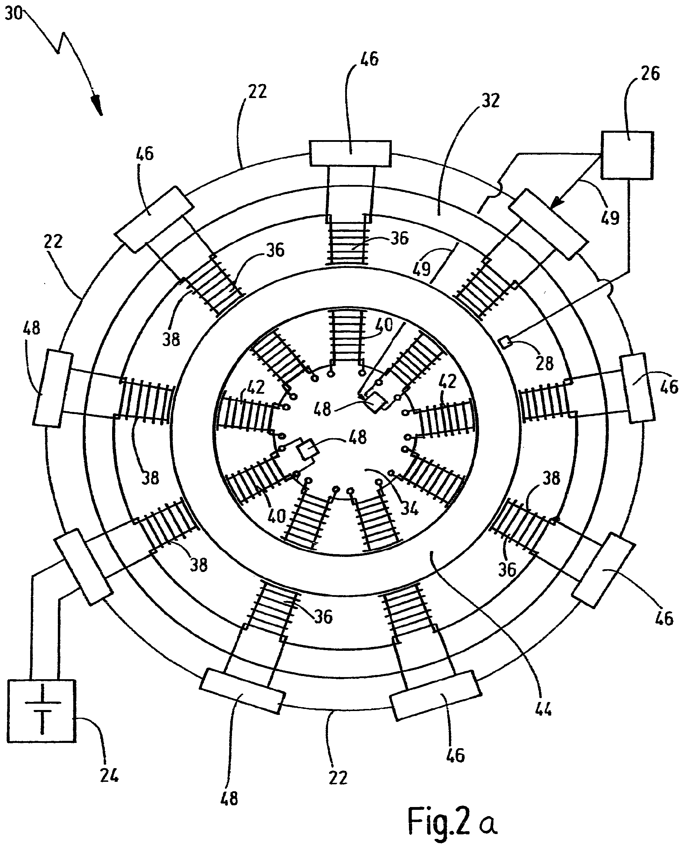

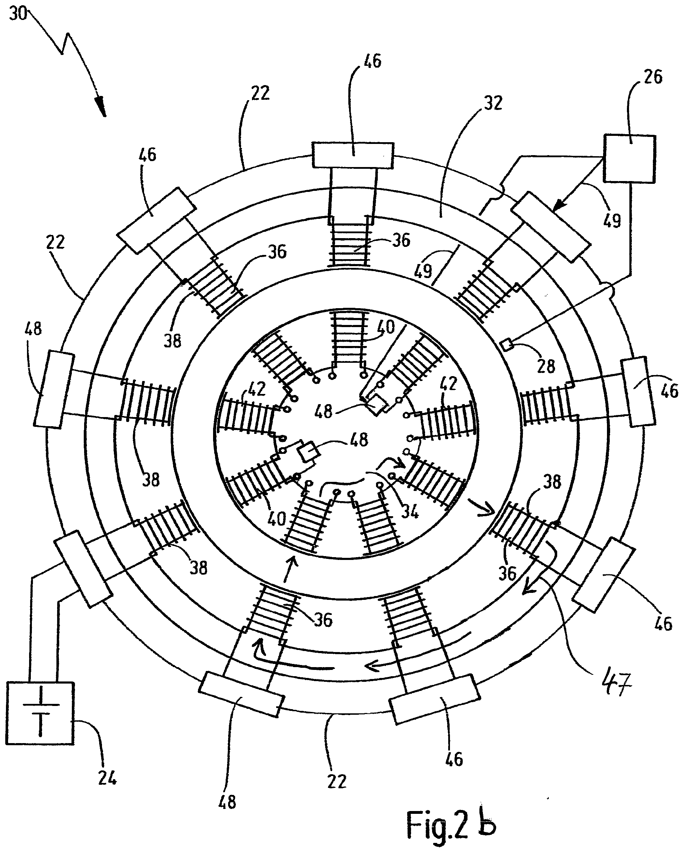

In Fig. 2 ist eine elektrische Maschine mit Doppelstator schematisch dargestellt und allgemein mit 30 bezeichnet. Die elektrische Maschine 30 weist einen Außenstator 32 und einen Innenstator 34 auf. Der Außenstator 32 ist als Statorring ausgebildet und weist nach innen gerichtete Statorzähne 36 auf, an denen jeweils eine Spule 38 angeordnet ist. Der Innenstator 34 weist radial nach außen gerichtete Statorzähne 40 auf, an denen jeweils eine Spule 42 angeordnet ist. Die Statoren 32, 34 weisen in diesem Beispiel jeweils neun Statorzähne 36, 40 auf, können jedoch auch jede beliebige Anzahl von Statorzähnen 36, 40 aufweisen.

Radial zwischen dem Außenstator 32 und dem Innenstator 34 ist ein Rotor 44 angeordnet, der relativ zu dem Außenstator 32 und dem Innenstator 34 drehbar gelagert ist.

Die Spulen 38 des Außenstators 32 sind jeweils elektrisch mit einer einzelnen Steuereinheit 46 verbunden. Die Spulen 42 des Innenstators sind jeweils elektrisch mit einer einzelnen Steuereinheit 48 verbunden, die hier lediglich beispielhaft für zwei der Spulen 42 dargestellt sind. Dadurch können die Spulen 38 des Außenstators 32 und die Spulen 42 des Innenstators 34 unabhängig und separat angesteuert und bestromt werden.

Wie in Fig. 1 sind die Steuereinheiten 46, 48 mittels der Verbindungsleitungen 22 elektrisch miteinander verbunden. Die Steuereinheiten 46, 48 werden über Steuerleitungen 49 von der übergeordneten Steuereinheit 26 gesteuert und auf der Grundlage eines Messsignals des Hall-Sensors 28 synchronisiert. Die Steuereinheiten 46, 48 werden mittels der Gleichspannungsquelle 24 mit elektrischer Energie versorgt, die in einer besonderen Ausführungsform über die Verbindungsleitungen 22 verteilt wird. Wie bei der elektrischen Maschine 10 können auch mehrere Gleichspannungsquellen 24 vorgesehen sein, die die Steuereinheiten 46, 48, insbesondere unabhängig, mit elektrischer Energie versorgen.

Dadurch, dass die Spulen 38 des Außenstators 32 und die Spulen 42 des Innenstators 34 separat und unabhängig voneinander angesteuert und bestromt werden können, können beliebige Arbeitspunkte der elektrischen Maschine 30 eingestellt werden. Insbesondere können rotierende magnetische Felder auch in elliptischer Form erzeugt werden. Ferner kann die elektrische Maschine 30 lediglich durch Ansteuerung der Spulen 38 des Außenstators angetrieben werden oder aber lediglich durch Ansteuerung der Spulen 42 des Innenstators 34 angesteuert werden. Dadurch können viele Arbeitspunkte eingestellt werden und unterschiedliche Drehzahl-Drehmomentkennlinien eingestellt werden, wodurch die elektrische Maschine 30 flexibel einsetzbar ist.

In einer einfachen Ausführungsform der elektrischen Maschine 30 sind eine oder mehrere der Steuereinheiten 46 jeweils mehreren der Spulen 38 des Außenstators 32 zugeordnet, um jeweils mehrere der Spulen 38 anzusteuern und zu bestromen. Ferner sind dabei eine oder mehrere der Steuereinheiten 48 jeweils mehreren der Spulen 42 des Innenstators 44 zugeordnet, um jeweils mehrere der Spulen 42 anzusteuern und zu bestromen. Dadurch können die Spulen 38 des Außenstators 32 und die Spulen 42 des Innenstators 44 unabhängig voneinander angesteuert und bestromt werden, wodurch. die beiden Statoren 32, 44 unabhängig voneinander zu- oder abgeschaltet werden können, um unterschiedliche Arbeitspunkte einzustellen.

In Fig. 2b ist die elektrische Maschine 30 zur Erläuterung des magnetischen Flusses schematisch dargestellt. Der magnetische Fluss ist in Fig. 2b allgemein mit 47 bezeichnet.

Der magnetische Fluss 47 durchsetzt die jeweiligen Statorzähne 36, 40, den Läufer, den Innenstator 34 sowie den Außenstator 32. Die angesteuerten Spulenpaare 38, 42 sind in Rotationsrichtung jeweils nicht benachbart bzw. durch wenigstens ein weiteres Spulenpaar 38, 42 beabstandet und durch den Innenstator 34, den ringförmigen Außenstator 32 sowie den Läufer magnetisch miteinander gekoppelt, so dass der gemeinsame magnetische Fluss 47 alle vier Spulen 38, 40 durchsetzt. Der magnetische Fluss 47 kann dabei individuell eingestellt werden, wobei entweder lediglich die Spulen 42 des Innenstators 34, die Spulen 38 des Außenstators 32 angesteuert werden oder alle Spulen 38, 42 angesteuert werden. Weiterhin können die Spulen 38, 42 mit unterschiedlichen Stromstärken angesteuert werden, um individuell den magnetischen Fluss 47 einzustellen. In einer besonderen Ausführungsform können die magnetisch gekoppelten Spulen 38, 42, die durch denselben magnetischen Fluss 47 durchsetzt werden, in entgegengesetzten Richtungen elektrisch angesteuert werden, so dass entgegengesetzte magnetische Teilflüsse entstehen und somit der gesamte magnetische Fluss 47 reduziert ist. Diese entgegengesetzt angesteuerten Spulen 38, 42 sind vorzugsweise an gegenüberliegenden Statorzähnen 36, 40 angeordnet. In einer besonderen Ausführungsform können die magnetisch gekoppelten Spulen 38, 42 und insbesondere die Spulen 38, 42 an gegenüberliegenden Statorzähnen 36, 40 unterschiedliche Windungszahlen aufweisen, um den magnetischen Fluss 47 individuell einstellen zu können.

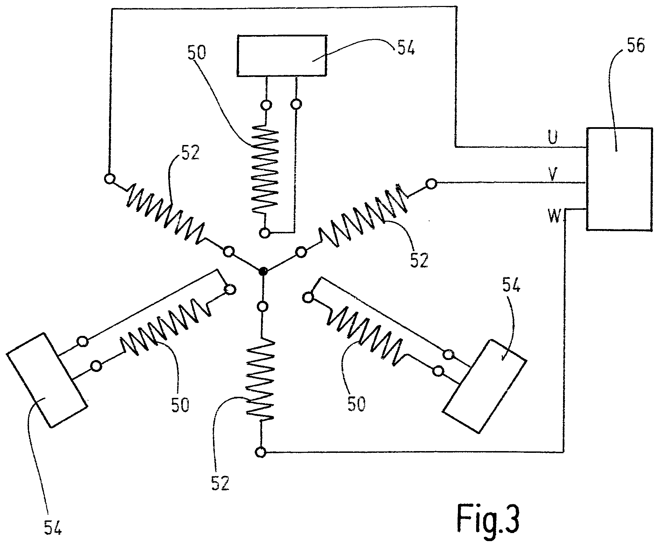

In Fig. 3 ist eine Ausführungsform einer Schaltung von Spulen eines Stators 12, 32, 34 der elektrischen Maschine 10, 30 schematisch dargestellt. Dabei weist der Stator sechs Spulen 50, 52 auf, die unterschiedlich geschaltet sind.

Die Spulen 50 sind jeweils separat mit einer einzelnen Steuereinheit 54 verbunden, um unabhängig von den Spulen 52 angesteuert und bestromt zu werden. Die Spulen 52 sind in der hier dargestellten Schaltungsvariante in einer Sternschaltung zusammengeschaltet und werden von der Steuereinheit 56 dreiphasig mit den Phasen U, V, W bestromt. Dadurch können die Spulen 50 bspw. für sehr geringe Drehmomente und Antriebsleistungen einzeln angesteuert werden und unabhängig von den anderen Spulen 52 die elektrische Maschine 10, 30 antreiben. Für eine Normallast kann die elektrische Maschine 10, 30 bspw. mittels der zusammengeschalteten Spulen 52 gemäß dem Stand der Technik angesteuert werden und für Spitzenleistung kann die elektrische Maschine 10, 30 durch eine Kombination der Spulen 52 und der Spulen 50 angesteuert werden, um eine maximale Antriebsleistung bereitzustellen.

Dadurch kann die unabhängige Ansteuerung der Spulen 50 und die gemeinsame Ansteuerung der Spulen 52 effektiv kombiniert werden.

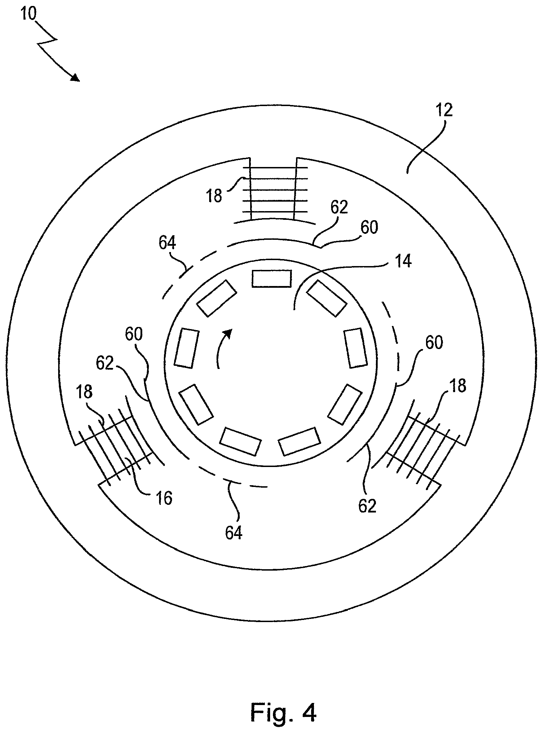

In Fig. 4 ist eine Ausführungsform der elektrischen Maschine 10 schematisch dargestellt. Gleiche Elemente sind mit gleichen Bezugsziffern bezeichnet, wobei hier lediglich die Besonderheiten erläutert sind.

Zwischen dem Stator 12 und dem Rotor 14 sind Abschirmelemente 60 angeordnet. Die Abschirmelemente 60 weisen einen Abschirmabschnitt 62 und einen Durchlassabschnitt 64 auf. Die Abschirmelemente 60 sind drehbar bzw. beweglich gelagert, so dass in einer hier dargestellten Position der Abschirmabschnitt 62 zwischen den Spulen 18 und den Permanentmagneten des Rotors 14 angeordnet ist. In dieser Position schirmt der Abschirmabschnitt 62 die Spulen 18 von den Permanentmagneten des Rotors 14 ab, so dass bspw. kein unerwünschter Induktionsstrom in den Spulen 18 induziert wird. Im Normalbetrieb werden die Abschirmelemente 60 so rotiert bzw. bewegt, dass die jeweiligen Durchlassabschnitte 64 zwischen den Spulen 18 und dem Rotor 14 angeordnet sind und die Wirkung des magnetischen Feldes der Spulen 18 auf dem Rotor 14 nicht behindern.

Auf diese Weise kann eine Dämpfung bzw. eine Unterbrechung des magnetischen Feldes, das von den Spulen 18 erzeugt wird, bewirkt werden. Ferner kann eine unerwünschte Wirkung der Permanentmagneten auf die abgeschalteten Spulen 18 verhindert werden. Durch die Abschirmung kann insbesondere eine Feldschwächung des magnetischen Feldes bewirkt und somit weitere Variation der Arbeitspunkte der elektrischen Maschine 10 erzielt werden.

In einer bevorzugten Ausführungsform sind die Abschirmelemente 60 unabhängig voneinander bewegbar. Die Abschirmelemente 60 weisen ein magnetisierbares Material auf und sind vorzugsweise eisenhaltig, so dass das magnetische Feld der Spulen 18 und der Permanentmagneten abgeschirmt werden kann.

In einer besonderen Ausführungsform weisen die Abschirmelemente 60 einen Bereich auf, durch den das magnetische Feld teilweise abgeschirmt wird und somit eine Dämpfung des magnetischen Feldes bzw. eine Feldschwächung bewirkt werden kann, wodurch eine weitere Variation der Arbeitspunkte erzielt werden kann.

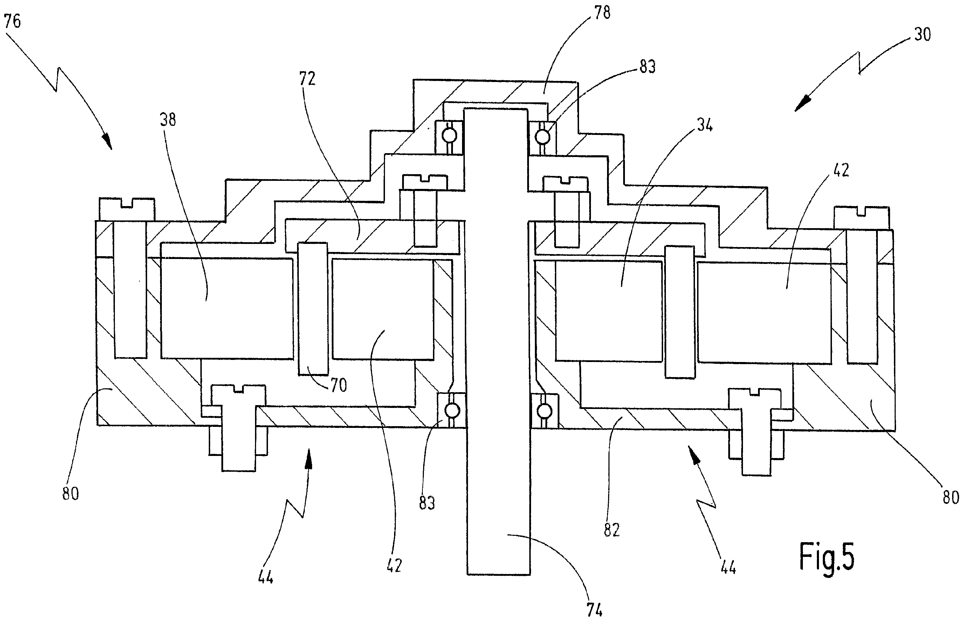

In Fig. 5 ist eine schematische Schnittansicht der elektrischen Maschine 30 mit Doppelstator dargestellt. Gleiche Elemente sind mit gleichen Bezugsziffern bezeichnet, wobei hier lediglich die Besonderheiten erläutert sind.

Der Rotor 44 weist Permanentmagnete 70 auf, die in radialer Richtung zwischen den Spulen 38 des Außenstators 32 und den Spulen 42 des Innenstators 34 drehbar gelagert sind. Die Permanentmagneten 70 sind über eine Verbindungsscheibe 72 drehfest mit einer Motorwelle 74 der elektrischen Maschine 30 verbunden. Die elektrische Maschine 30 weist ein Maschinengehäuse 76 auf, das aus einem Axialdeckel 78, einem Mantel 80 und einem Bodenabschnitt 82 gebildet ist. Der Axialdeckel 78 ist mittels Schrauben mit dem Mantel 80 verbunden und der Mantel 80 ist mittels Schrauben mit dem Bodenabschnitt 82 verbunden. An dem Mantel 80 sind die Spulen 38 des Außenstators 32 drehfest gelagert und an dem Bodenabschnitt 82 sind die Spulen 42 des Innenstators 34 drehfest gelagert. Dadurch ist sowohl der Außenstator 32 als auch der Innenstator 34 drehfest mit dem Gehäuse 76 verbunden. Die Motorwelle 74 ist mittels Lagern 83 an dem Axialdeckel 78 und an dem Bodenabschnitt 82 drehbar gelagert. Dadurch kann die Rotation der Permanentmagneten 70 auf die Motorwelle 74 übertragen und die Antriebsleistung an der Motorwelle 74 abgegriffen werden.

Die elektrische Maschine 10, 30 kann zum Antreiben von Kraftfahrzeugen, wie z.B. Elektrofahrrädern, oder aber zum Antreiben von Industriemaschinen, z.B. Werkzeugmaschinen, verwendet werden.

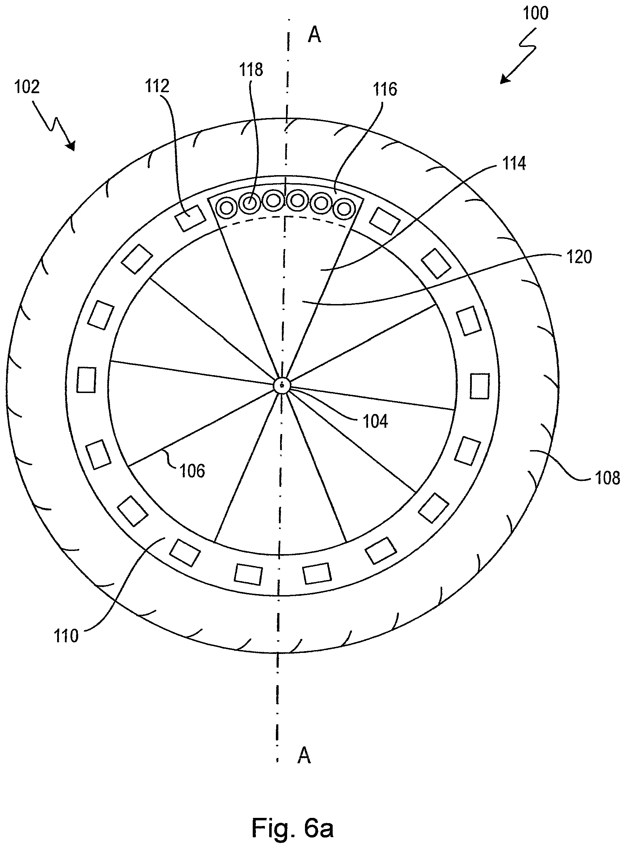

In Fig. 6a ist ein elektrischer Antrieb zum Antreiben eines Rades eines Kraftfahrzeuges, insbesondere eines Elektrofahrrades schematisch dargestellt und allgemein mit 100 bezeichnet.

Der elektrische Antrieb 100 dient zum Antreiben eines Rades 102 eines Kraftfahrzeugs, insbesondere eines Fahrrades. Das Rad 102 weist eine Nabe 104, Speichen 106 und einen Reifen 108 auf. Zwischen den Speichen 106 und dem Reifen 108 ist ein ringförmiger Rotor 110 angeordnet. Der Rotor 110 ist mit einer nicht gesondert dargestellten Felge des Rades 102 verbunden oder bildet die Felge des Rades 102.

Der Rotor 110 weist über den Umfang verteilt Permanentmagneten 112 auf. Dem Rotor 110 ist eine Statoranordnung zugeordnet, die an der Nabe 104 festgelegt ist. Die Statoranordnung 114 weist einen Stator 116 auf, der in axialer Richtung neben dem Rotor 110 angeordnet ist. Der Stator 116 weist eine Mehrzahl von Erregerspulen 118 auf, die zum Antreiben des Rotors 110 ein magnetisches Feld erzeugen, das die Permanentmagneten durchsetzt. Der Stator 116 ist als offener Statorring ausgebildet und einem Kreisbogenabschnitt des Rotors 110 zugeordnet. Der offene Statorring ist mittels einer Halterung 120 an der Nabe 104 festgelegt.

Dadurch, dass der Stator 116 als offener Statorring ausgebildet ist, ist eine besonders kompakte Bauform möglich, wobei ein Teil der Permanentmagneten 112 in jeder Rotationsposition des Rades 102 durch die Spulen 118 durchsetzbar sind und der Rotor 110 in jeder Rotationsposition antreibbar ist. Zur Synchronisation der Spulen 118 mit der Rotationsposition des Rotors 110 weist der Stator 116 einen hier nicht dargestellten Hall-Sensor auf.

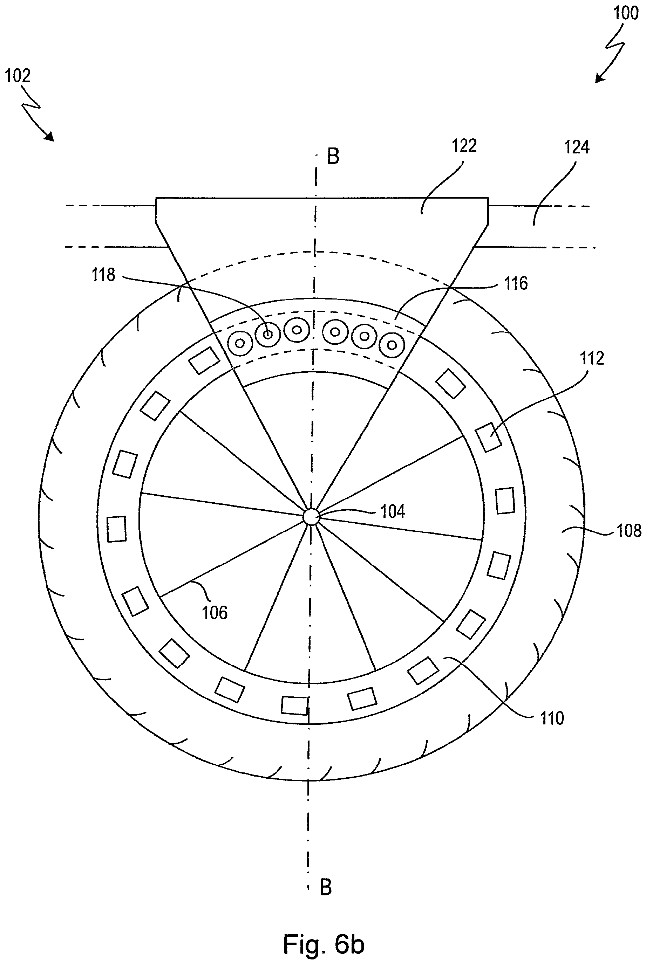

In Fig. 6b ist eine weitere Ausführungsform des elektrischen Antriebs 100, insbesondere zum Antreiben eines Fahrrades schematisch dargestellt. Gleiche Elemente sind mit gleichen Bezugsziffern bezeichnet, wobei hier lediglich die Besonderheiten erläutert sind.

Der offene Statorring 116 mit den Spulen 118 ist einem Kreisbogenabschnitt des Rotors 110 zugeordnet und mittels einer Halterung 122 an einem hier lediglich schematischen dargestellten Rahmen 124 des Fahrrades festgelegt bzw. gelagert. Die Halterung 122 erstreckt sich von dem ringförmigen Rotor 110 in radialer Richtung nach außen und ist mit dem Rahmen 124 fest verbunden bzw. an dem Rahmen 124 gelagert. In dieser Ausführungsform besteht keine direkte Verbindung zwischen dem offenen Statorring 116 und der Nabe 104.

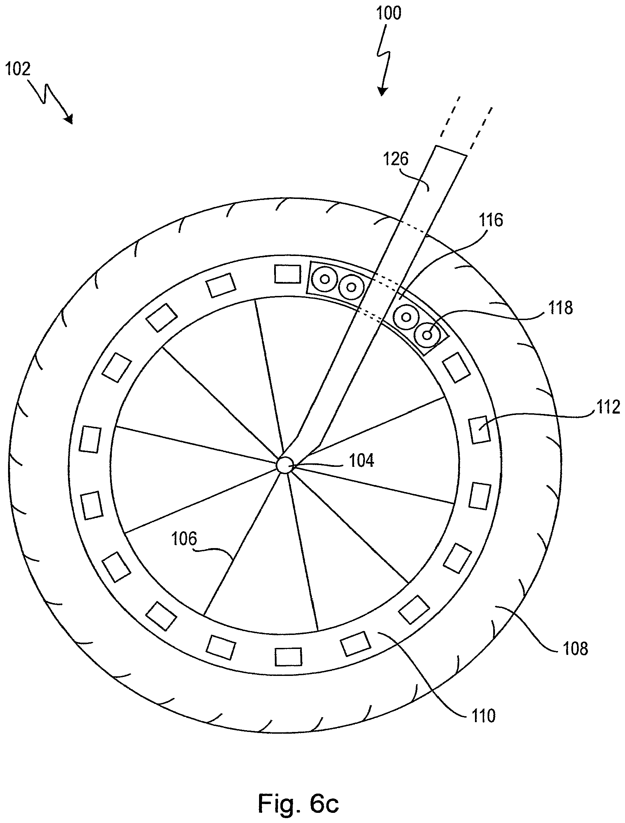

In Fig. 6c ist eine weitere Ausführungsform des elektrischen Antriebs 100 schematisch dargestellt. Gleiche Elemente sind mit gleichen Bezugsziffern bezeichnet, wobei hier lediglich die Besonderheiten erläutert sind.

Der elektrische Antrieb 100 weist den offenen Statorring 116 mit den Spulen 118 auf, wobei der offene Statorring 116 einem Kreisbogenabschnitt des Rotors 110 zugeordnet ist. Der offene Statorring 116 ist an einer Gabel 126 des Fahrrades festgelegt bzw. gelagert. Dies ist eine besonders vorteilhafte Ausführungsform, da auf eine besondere Konstruktion der Halterung 114, 122 verzichtet werden kann. Der Antrieb 100 kann zwei offene Statorringe 116 aufweisen, die auf axial gegenüberliegenden Seiten des Rotors 110 angeordnet sind und an jeweils einem Gabelholm der Gabel 126 festgelegt sind.

In den in Fig. 6a-c dargestellten Ausführungsformen bildet der offene Statorring 116 etwa einen Viertelkreis. Es versteht sich, dass auch offene Statorringe 116 möglich sind, die einen Halbkreis, einen Dreiviertelkreis oder dergleichen bilden. Die offenen Statorringe 116 können eine beliebige Anzahl von Spulen 118 aufweisen.

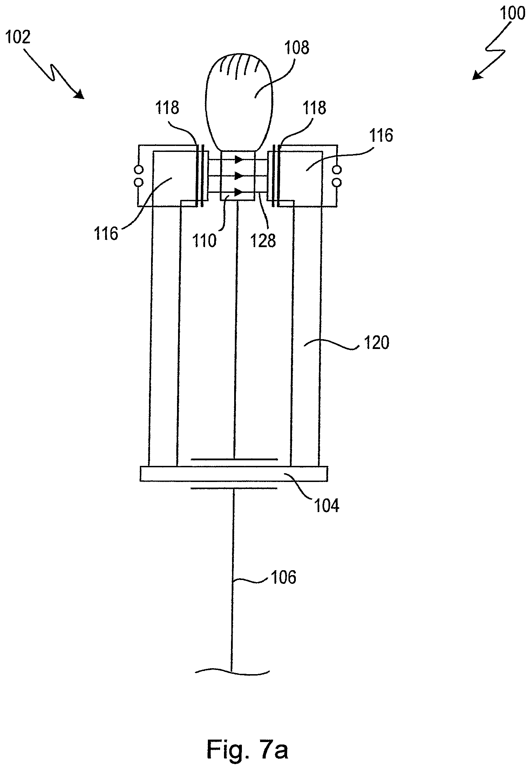

In Fig. 7a ist eine schematische Schnittansicht des elektrischen Antriebs 100 entlang der Linie A-A aus Fig. 6a dargestellt. Gleiche Elemente sind mit gleichen Bezugsziffern bezeichnet, wobei hier lediglich die Besonderheiten erläutert sind.

In der in Fig. 7a dargestellten Ausführungsform weist der elektrische Antrieb 100 zwei offene Statorringe 116 auf, die in axialer Richtung auf beiden Seiten neben dem Rotor 110 angeordnet sind. Mit anderen Worten ist der Rotor 110 in axialer Richtung zwischen den offenen Statorringen 116 angeordnet. Die Spulen 118 erzeugen ein magnetisches Feld 128, das den Rotor 110 in axialer Richtung durchsetzt. Dadurch kann eine Kraft auf den Rotor 110 ausgeübt werden und das Rad 102 in entsprechender Weise angetrieben werden. Die Spulen 118 werden durch wenigstens eine hier nicht näher dargestellte Steuereinheit angesteuert.

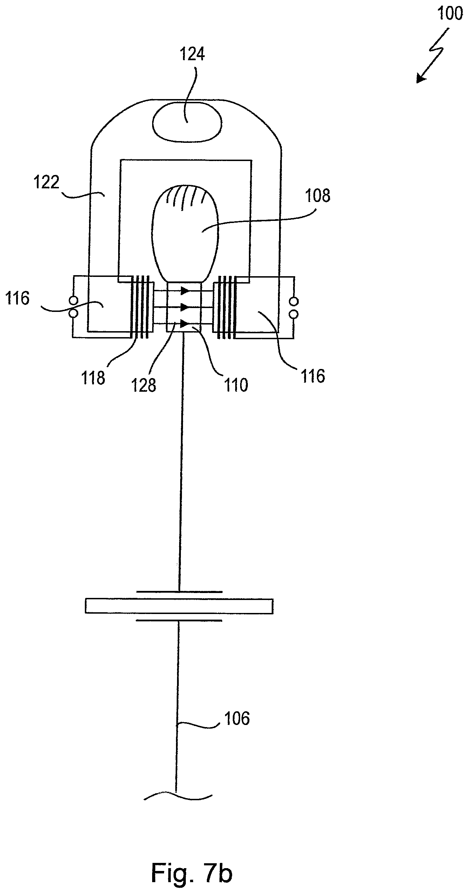

In Fig. 7b ist eine schematische Schnittansicht des elektrischen Antriebs 100 entlang der Linie B-B aus Fig. 6b dargestellt. Gleiche Elemente sind mit gleichen Bezugsziffern bezeichnet, wobei hier lediglich die Besonderheiten erläutert sind.

Die in Fig. 7b dargestellte Ausführungsform des elektrischen Antriebs 100 weist zwei offene Statorringe 116 auf, die in axialer Richtung auf beiden Seiten neben dem Rotor 110 angeordnet sind. Mit anderen Worten ist der Rotor 110 in axialer Richtung zwischen den beiden Statorringen 116 angeordnet. Die Spulen 118 erzeugen das magnetische Feld 128, das den Rotor 110 in axialer Richtung durchsetzt. Dadurch kann eine Kraft auf den Rotor 110 ausgeübt werden und das Rad 102 in entsprechender Weise angetrieben werden. Es versteht sich, dass das Rad 102 durch die Statorringe 106 auch entsprechend abgebremst werden kann. Die Spulen 118 werden durch wenigstens eine hier nicht näher dargestellte Steuereinheit angesteuert.

Die Halterung 122 ist an dem Rahmen 124 festgelegt und umgibt den Reifen 108 sowohl in axialer als auch in umfänglicher Richtung.

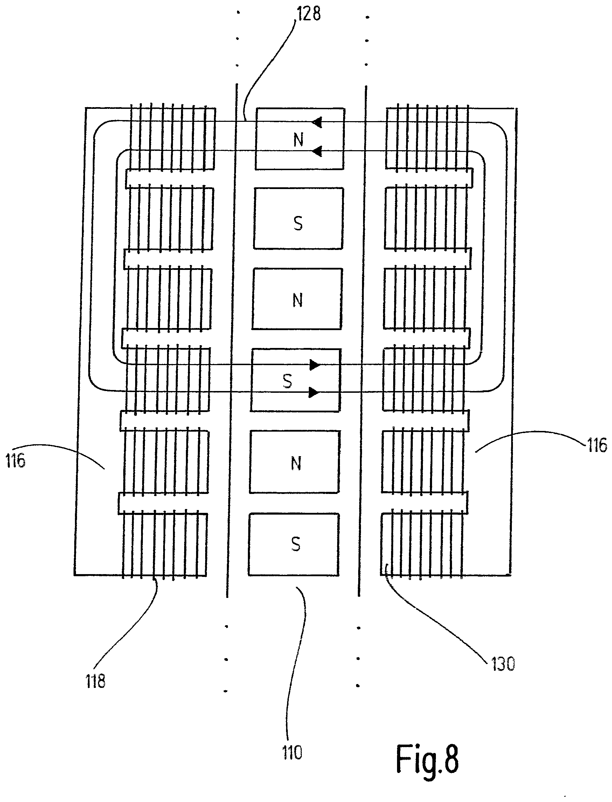

In Fig. 8 ist eine schematische Schnittansicht der Umfangsfläche des Rotors 110 dargestellt zur Erläuterung der Funktionsweise der offenen Statorringe 116 dargestellt. Der Rotor 110 weist die Permanentmagneten 112 auf, die entsprechend ihrer Magnetisierung abwechselnd angeordnet sind. Die offenen Statorringe 116 sind auf beiden Seiten des Rotors 110 angeordnet und weisen jeweils sechs axial ausgerichtete Statorzähne 130 und entsprechend sechs der Spulen 118 auf. In der in Fig. 8 dargestellten Ansteuersituation werden jeweils zwei Spulen 118 der beiden offenen Statorringe 116 angesteuert, so dass das magnetische Feld 128 ausgebildet wird, das zwei der Permanentmagneten 112 in axialer Richtung durchsetzt. Dadurch, dass auf beiden Seiten jeweils ein offener Statorring 116 angeordnet ist, lässt sich der magnetische Rückfluss mit einfachen Mitteln ausbilden.

In einer alternativen Ausführungsform kann der magnetische Rückfluss auch innerhalb des Rotors 110 ausgebildet werden, so dass lediglich ein Statorring 116 an einer Seite des Rotors 110 angeordnet sein kann.

Dadurch, dass der Rotor 110 in radialer Richtung zwischen einer Lauffläche des Rades 102 bzw. des Reifens 108 und den Speichen 106 des Rades 102 angeordnet ist, ist das Drehmoment, das von dem elektrischen Antrieb 100 erzeugt werden muss gering, wodurch der elektrische Strom zum Erzeugen des Magnetfeldes 128 relativ gering ist. Dadurch kann die Steuereinheit zum Ansteuern der Spulen 118 geringer dimensioniert werden, wodurch der Antrieb 100 im Allgemeinen technisch weniger aufwändig und kostengünstiger ist.

## Patentansprüche

1. Elektrische Maschine (10; 30) zum Bereitstellen von Antriebsleistung, insbesondere zum Antreiben von Kraftfahrzeugen, mit:
- einer Statoranordnung (12; 32, 34), die eine Mehrzahl von Spulen (18; 38, 42; 50, 52) aufweist,
- einem Rotor (14; 44), der relativ zu der Statoranordnung (12; 32, 34) drehbar gelagert ist und von einem magnetischen Feld der Spulen (18; 38, 42; 50, 52) in wenigstens einer Drehrichtung antreibbar ist,
- einer Mehrzahl von Steuereinheiten (20; 46, 48; 54, 56), die mit den Spulen (18; 38, 42) elektrisch verbunden sind, um die Spulen (18; 38, 42; 50, 52) anzusteuern und zur Erzeugung des magnetischen Feldes mit elektrischem Strom zu versorgen, wobei jede der Steuereinheiten (20; 46, 48; 54) jeweils einer einzelnen der Spulen (18; 38, 42) zugeordnet ist und dazu ausgebildet sind, die jeweiligen Spulen (18; 38, 42) unabhängig anzusteuern und unabhängig mit elektrischem Strom zu versorgen,
- wobei die Elektrische Maschine (30, 36) ferner eine übergeordnete Steuereinheit (26) aufweist, die mit den Steuereinheiten (20, 46, 48) verbunden ist und die Steuereinheiten (20, 46, 48) entsprechend ansteuert,
wobei die Statoranordnung (12; 32, 34) eine Mehrzahl von Statorzähnen (16; 36) aufweist, wobei die unabhängig angesteuerten Spulen (18; 38, 42; 50) jeweils an einem unterschiedlichen der Statorzähne (16; 36) angeordnet sind, und **dadurch gekennzeichnet dass** die unabhängig angesteuerten Spulen (18; 38, 42; 50) magnetisch gekoppelt sind und an den Statorzähnen (16; 36) derart angeordnet sind, dass sie von einem gemeinsamen magnetischen Fluss (29, 47) durchsetzt werden und die Steuereinheiten (20; 46; 48, 54) dazu ausgebildet sind, die magnetisch gekoppelten Spulen (18; 38, 42; 50) entgegengesetzt derart anzusteuern, dass die Spulen (18; 38, 42; 50) entgegengesetzte magnetische Flüsse ausbilden, so dass die einzelnen magnetischen Flüsse, die zusammen den magnetischen Fluss (29, 47) bilden, entgegengesetzt sind und so den magnetischen Fluss (29, 47) entsprechend teilweise aufheben.

2. Elektrische Maschine nach Anspruch 1, **dadurch gekennzeichnet, dass** die Steuereinheiten (20; 46; 48, 54) dazu ausgebildet sind, die unabhängig angesteuerten Spulen (18; 38, 42; 50) derart anzusteuern, dass zwei der unabhängig angesteuerten Spulen (18; 38, 42; 50) wenigstens zeitweise von einem gemeinsamen magnetischen Fluss (29, 47) durchsetzt werden.

3. Elektrische Maschine nach Anspruch 1 oder 2, **dadurch gekennzeichnet, dass** die Steuereinheiten (20; 46; 48, 54) dazu ausgebildet sind, die unabhängig angesteuerten Spulen (18; 38, 42; 50) mit unterschiedlichen Stromstärken anzusteuern.

4. Elektrische Maschine nach einem der Ansprüche 1 bis 3, **dadurch gekennzeichnet, dass** die elektrische Maschine (10; 30) wenigstens drei Steuereinheiten (20; 46, 48; 54) aufweist, wobei jede der Steuereinheiten (20; 46, 48; 54) einer einzelnen Spule (18; 38, 42; 50) zugeordnet ist, um die Spulen (18; 38, 42; 50) unabhängig anzusteuern und wobei die Steuereinheiten (20; 46, 48; 54) derart synchronisiert sind, dass ein rotierendes Magnetfeld zum Antreiben des Rotors (14; 44) bereitgestellt wird.

5. Elektrische Maschine nach einem der Ansprüche 1 bis 4, **dadurch gekennzeichnet, dass** der Statoranordnung (12; 32, 34) wenigstens ein Rotorpositionserfassungselement zugeordnet ist, das mit den Steuereinheiten (20; 46, 48; 54, 56) elektrisch verbunden ist, um die Steuereinheiten (20; 46, 48; 54, 56) mit einer erfassten Position des Rotors (14; 44) zu synchronisieren.

6. Elektrische Maschine nach einem der Ansprüche 1 bis 5, **dadurch gekennzeichnet, dass** die Statoranordnung (32, 34) einen ersten Stator (32) und einen zweiten Stator (34) aufweist, wobei wenigstens ein Teil des Rotors (44) zwischen dem ersten Stator (32) und dem zweiten Stator (34) drehbar gelagert ist, wobei der erste Stator (32) eine erste Spulenanordnung mit einer Mehrzahl von Spulen (38) aufweist und der zweite Stator (32) eine zweite Spulenanordnung mit einer Mehrzahl von Spulen (42) aufweist, und wobei die Steuereinheiten (46, 48) jeweils einer der Spulenanordnungen zugeordnet sind, um die Spulenanordnungen unabhängig voneinander anzusteuern und unabhängig mit elektrischem Strom zu versorgen.

7. Elektrische Maschine nach Anspruch 6, **dadurch gekennzeichnet, dass** der erste Stator (32) ein Außenstator (32) ist und der zweite Stator (34) ein Innenstator (34) ist und wobei wenigstens ein Teil des Rotors (44) in axialer Richtung zwischen dem Außenstator (32) und dem Innenstator (34) drehbar gelagert ist.

8. Elektrische Maschine nach Anspruch 6 oder 7, **dadurch gekennzeichnet, dass** wenigstens zwei der Steuereinheiten (38, 42) jeweils einer einzelnen der Spulen (38, 42) zugeordnet sind, um die jeweiligen Spulen (38, 42) unabhängig anzusteuern und unabhängig mit elektrischem Strom zu versorgen.

9. Elektrische Maschine nach Anspruch 8, **dadurch gekennzeichnet, dass** eine unabhängig angesteuerte Spule (38) mit dem ersten Stator (32) verbunden ist und eine weitere unabhängig angesteuerte Spule (42) mit dem zweiten Stator (34) verbunden ist.

10. Elektrische Maschine nach einem der Ansprüche 6 bis 8, **dadurch gekennzeichnet, dass** die erste und die zweite Spulenanordnung jeweils drei Spulen (38, 42) aufweisen und wobei beiden Spulenanordnungen jeweils drei Steuereinheiten (46, 48) zugeordnet sind, die jeweils mit einer einzelnen der Spulen (38, 42) verbunden sind, um die Spulen (38, 42) unabhängig anzusteuern und wobei die Steuereinheiten (46, 48) derart synchronisiert sind, dass ein rotierendes Magnetfeld bereitgestellt wird.

11. Elektrische Maschine nach einem der Ansprüche 8 bis 10, **dadurch gekennzeichnet, dass** die unabhängig angesteuerten Spulen (38, 42) magnetisch gekoppelt sind, so dass die unabhängig angesteuerten Spulen (38, 42) von einem gemeinsamen magnetischen Fluss (47) durchsetzt werden.

12. Elektrische Maschine nach Anspruch 11, **dadurch gekennzeichnet, dass** die magnetisch gekoppelten Spulen (38, 42) jeweils an gegenüberliegenden Statorzähnen (36, 40) des Innenstators (34) und des Außenstators (32) angeordnet sind.

13. Elektrische Maschine nach Anspruch 11 oder 12, **dadurch gekennzeichnet, dass** die Steuereinheiten (46, 48) dazu ausgebildet sind, die magnetisch gekoppelten Spulen (38, 42) entgegengesetzt derart anzusteuern, dass die Spulen (38, 42) entgegengesetzte magnetische Flüsse ausbilden.

14. Elektrische Maschine nach einem der Ansprüche 1 bis 13, **dadurch gekennzeichnet, dass** die unabhängig angesteuerten Spulen (38, 42) unterschiedliche Windungszahlen aufweisen.

## Claims

1. Electric machine (10; 30) for providing drive power, in particular for driving motor vehicles, comprising:
- a stator assembly (12; 32, 34) comprising a plurality of coils (18; 38, 42; 50, 52),
- a rotor (14; 44) which is rotatably mounted relative to the stator assembly (12; 32, 34) and can be driven in at least one direction of rotation by a magnetic field of the coils (18; 38, 42; 50, 52),
- a plurality of control units (20; 46, 48; 54, 56) electrically connected to said coils (18; 38, 42) for driving said coils (18; 38, 42; 50, 52) and supplying electric current to generate said magnetic field, each of said control units (20; 46, 48; 54) being associated with a respective one of said coils (18; 38, 42) and adapted to independently drive and independently supply electric current to said respective coils (18; 38, 42),
- wherein the electric machine (30, 36) further comprises a superordinate control unit (26) which is connected to the control units (20, 46, 48) and controls the control units (20, 46, 48) accordingly,
wherein the stator assembly (12; 32, 34) comprises a plurality of stator teeth (16; 36), wherein the independently driven coils (18; 38, 42; 50) are each disposed on a different one of the stator teeth (16; 36), and
**characterized in that** the independently driven coils (18; 38, 42; 50) are magnetically coupled and disposed on the stator teeth (16; 36) such that a common magnetic flux (29, 47) passes through them, and the control units (20; 46; 48, 54) are configured to oppositely drive the magnetically coupled coils (18; 38, 42; 50) in such a way that the coils (18; 38, 42; 50) form opposing magnetic fluxes so that the individual magnetic fluxes which together form the magnetic flux (29, 47) are opposed and thus cancel the magnetic flux (29, 47) partially.

2. Electrical machine according to claim 1, **characterized in that** the control units (20; 46; 48, 54) are configured to drive the independently driven coils (18; 38, 42; 50) such that a common magnetic flux (29, 47) passes through two of the independently driven coils (18; 38, 42; 50) at least temporarily.

3. Electric machine according to claim 1 or 2, **characterized in that** the control units (20; 46; 48, 54) are configured to drive the independently driven coils (18; 38, 42; 50) with different currents.

4. Electric machine according to any of claims 1 to 3, **characterized in that** the electric machine (10; 30) comprises at least three control units (20; 46, 48; 54), wherein each of the control units (20; 46, 48; 54) is associated with an individual coil (18; 38, 42; 50) for independently driving the coils (18; 38, 42; 50) and wherein the control units (20; 46, 48; 54) are synchronized such that a rotating magnetic field is provided for driving the rotor (14; 44).

5. Electric machine according to any of claims 1 to 4, **characterized in that** the stator assembly (12; 32, 34) is associated with at least one rotor position detection unit which is electrically connected to the control units (20; 46, 48; 54, 56) so as to synchronize the control units (20; 46, 48; 54, 56) with a detected position of the rotor (14; 44).

6. Electric machine according to any of claims 1 to 5, **characterized in that** the stator assembly (32, 34) comprises a first stator (32) and a second stator (34),wherein at least part of the rotor (44) is rotatably mounted between the first stator (32) and the second stator (34), wherein the first stator (32) comprises a first coil arrangement comprising a plurality of coils (38) and the second stator (32) comprises a second coil arrangement comprising a plurality of coils (42), and wherein the control units (46, 48) are respectively associated with one of the coil arrangements to independently drive and independently supply electrical power to the coil arrangements.

7. Electric machine according to claim 6, **characterized in that** the first stator (32) is an outer stator (32) and the second stator (34) is an inner stator (34) and wherein at least a part of the rotor (44) is rotatably, in the axial direction, mounted between the outer stator (32) and the inner stator (34).

8. An electric machine according to claim 6 or 7, **characterized in that** at least two of the control units (38, 42) are each associated with a single one of the coils (38, 42) respectively so as to independently drive and independently supply electric current to the respective coils (38, 42).

9. Electrical machine according to claim 8, **characterized in that** an independently driven coil (38) is connected to the first stator (32) and a further independently driven coil (42) is connected to the second stator (34).

10. Electrical machine according to any of claims 6 to 8, **characterized in that** the first and the second coil arrangement each have three coils (38, 42) and wherein both coil arrangements are each associated with three control units (46, 48), each of which is connected to a single one of the coils (38, 42) so as to drive the coils (38, 42) independently and wherein the control units (46, 48) are synchronized in such a way that a rotating magnetic field is provided.

11. Electric machine according to any of claims 8 to 10, **characterized in that** the independently driven coils (38, 42) are magnetically coupled such that a common magnetic flux (47) passes through the independently driven coils (38, 42).

12. Electric machine according to claim 11, **characterized in that** the magnetically coupled coils (38, 42) are respectively arranged on opposite stator teeth (36, 40) of the inner stator (34) and the outer stator (32).

13. Electric machine according to claim 11 or 12, **characterized in that** the control units (46, 48) are configured to drive the magnetically coupled coils (38, 42) in opposite directions in such a way that the coils (38, 42) form opposite magnetic fluxes.

14. Electric machine according to any of claims 1 to 13, **characterized in that** the independently controlled coils (38, 42) have different numbers of windings.

## Revendications

1. Machine électrique (10 ; 30) pour fournir une puissance d'entraînement, en particulier pour entraîner des véhicules automobiles, comprenant :
- un ensemble stator (12 ; 32, 34) qui comporte une pluralité de bobines (18 ; 38, 42 ; 50, 52),
- un rotor (14 ; 44) qui est monté en rotation par rapport à l'ensemble stator (12 ; 32, 34) et peut être entraîné dans au moins un sens de rotation par un champ magnétique des bobines (18 ; 38, 42 ; 50, 52),
- une pluralité d'unités de commande (20 ; 46, 48 ; 54, 56) qui sont reliées électriquement aux bobines (18 ; 38, 42) pour commander les bobines (18 ; 38, 42 ; 50, 52) et pour les alimenter en courant électrique afin de générer le champ magnétique, dans laquelle chacune des unités de commande (20 ; 46, 48 ; 54) est respectivement associée à une seule des bobines (18 ; 38, 42) et est conçue pour commander indépendamment les bobines respectives (18 ; 38, 42) et les alimenter indépendamment en courant électrique,
- dans laquelle la machine électrique (30, 36) comporte en outre une unité de commande supérieure (26) qui est reliée aux unités de commande (20, 46, 48) et commande de manière correspondante les unités de commande (20, 46, 48), dans laquelle l'ensemble stator (12 ; 32, 34) comporte une pluralité de dents de stator (16 ; 36), dans laquelle les bobines entraînées indépendamment (18 ; 38, 42 ; 50) sont respectivement disposées sur l'une, différente, des dents de stator (16 ; 36), et
**caractérisée en ce que** les bobines commandées indépendamment (18 ; 38, 42 ; 50) sont couplées magnétiquement et sont disposées sur les dents de stator (16 ; 36) de manière à ce qu'elles soient traversées par un flux magnétique commun (29, 47), et les unités de commande (20 ; 46 ; 48, 54) sont conçues de manière à commander les bobines couplées magnétiquement (18 ; 38, 42 ; 50) dans des sens opposés afin que les bobines (18 ; 38, 42 ; 50) produisent des flux magnétiques opposés, de sorte que les flux magnétiques individuels, qui forment ensemble le flux magnétique (29, 47), sont opposés et annulent ainsi partiellement de manière correspondante le flux magnétique (29, 47).

2. Machine électrique selon la revendication 1, **caractérisée en ce que** les unités de commande (20 ; 46 ; 48, 54) sont conçues pour commander les bobines commandées indépendamment (18 ; 38, 42 ; 50) de manière à ce que deux des bobines commandées indépendamment (18 ; 38, 42 ; 50) soient au moins temporairement traversées par un flux magnétique commun (29, 47).

3. Machine électrique selon la revendication 1 ou 2, **caractérisée en ce que** les unités de commande (20 ; 46 ; 48, 54) sont conçues pour commander les bobines commandées indépendamment (18 ; 38, 42 ; 50) avec des intensités de courant différentes.

4. Machine électrique selon l'une des revendications 1 à 3, **caractérisée en ce que** la machine électrique (10 ; 30) comporte au moins trois unités de commande (20 ; 46, 48 ; 54), dans laquelle chacune des unités de commande (20 ; 46, 48 ; 54) est associée à une bobine individuelle (18 ; 38, 42 ; 50) afin de commander indépendamment les bobines (18 ; 38, 42 ; 50) et dans laquelle les unités de commande (20 ; 46, 48 ; 54) sont synchronisées de manière à ce qu'un champ magnétique tournant soit produit pour entraîner le rotor (14 ; 44).

5. Machine électrique selon l'une des revendications 1 à 4, **caractérisée en ce qu'**au moins un élément de détection de position du rotor, qui est relié électriquement aux unités de commande (20 ; 46, 48 ; 54, 56), est associé à l'ensemble stator (12 ; 32, 34) afin de synchroniser les unités de commande (20 ; 46, 48 ; 54, 56) avec une position détectée du rotor (14 ; 44).

6. Machine électrique selon l'une des revendications 1 à 5, **caractérisée en ce que** l'ensemble stator (32, 34) comporte un premier stator (32) et un second stator (34), dans laquelle au moins une partie du rotor (44) est supportée en rotation entre le premier stator (32) et le second stator (34), dans laquelle le premier stator (32) comprend un premier ensemble à bobines comprenant une pluralité de bobines (38) et le second stator (32) comprend un second ensemble à bobines comprenant une pluralité de bobines (42), et dans laquelle les unités de commande (46, 48) sont respectivement associées à l'un des ensembles à bobines afin de commander les ensembles à bobines indépendamment les uns des autres et de les alimenter indépendamment en courant électrique.

7. Machine électrique selon la revendication 6, **caractérisée en ce que** le premier stator (32) est un stator extérieur (32) et le second stator (34) est un stator intérieur (34) et dans laquelle au moins une partie du rotor (44) est supportée en rotation dans le sens axial entre le stator extérieur (32) et le stator intérieur (34).

8. Machine électrique selon la revendication 6 ou 7, **caractérisée en ce qu'**au moins deux des unités de commande (38, 42) sont respectivement associées à une seule des bobines (38, 42) afin de commander indépendamment les bobines respectives (38, 42) et de les alimenter indépendamment en courant électrique.

9. Machine électrique selon la revendication 8, **caractérisée en ce qu'**une bobine commandée indépendamment (38) est reliée au premier stator (32) et une autre bobine commandée indépendamment (42) est reliée au second stator (34).

10. Machine électrique selon l'une des revendications 6 à 8, **caractérisée en ce que** les premier et second ensembles à bobines comportent respectivement trois bobines (38, 42) et dans laquelle trois unités de commande (46, 48), qui sont respectivement reliées à une seule des bobines (38, 42), sont respectivement associées aux deux ensembles à bobines afin de commander indépendamment les bobines (38, 42) et dans laquelle les unités de commande (46, 48) sont synchronisées de manière à produire un champ magnétique tournant.

11. Machine électrique selon l'une des revendications 8 à 10, **caractérisée en ce que** les bobines commandées indépendamment (38, 42) sont couplées magnétiquement de manière à ce que les bobines commandées indépendamment (38, 42) soient traversées par un flux magnétique commun (47).

12. Machine électrique selon la revendication 11, **caractérisée en ce que** les bobines couplées magnétiquement (38, 42) sont respectivement disposées sur des dents de stator opposées (36, 40) du stator intérieur (34) et du stator extérieur (32).

13. Machine électrique selon la revendication 11 ou 12, **caractérisée en ce que** les unités de commande (46, 48) sont conçues pour commander les bobines couplées magnétiquement (38, 42) dans des sens opposés de manière à ce que les bobines (38, 42) produisent des flux magnétiques opposés.

14. Machine électrique selon l'une des revendications 1 à 13, **caractérisée en ce que** les bobines commandées indépendamment (38, 42) présentent des nombres de spires différents.
